# FASCICULE DE BREVET EUROPEEN

(11) **EP 2 925 197 B1**
(45) Date de publication et mention de la délivrance du brevet: **21.09.2016**
(21) Numéro de dépôt: 13820789.9
(22) Date de dépôt: 27.11.2013
(51) Int. Cl.: A47J 36/16, A47J 43/046

(54) **APPAREIL ÉLECTROMÉNAGER DE PRÉPARATION CULINAIRE COMPORTANT UN RÉCIPIENT DE TRAVAIL COMPRENANT UN PANIER POUR LA CUISSON À LA VAPEUR**
HAUSHALTSVORRICHTUNG FÜR SPEISENZUBEREITUNG MIT EINEM ARBEITSBEHÄLTER MIT KORB ZUM DAMPFGAREN
HOUSEHOLD APPLIANCE FOR FOOD PREPARATION, COMPRISING A WORKING CONTAINER HAVING A BASKET FOR STEAM COOKING

(30) Priorité: 03.12.2012 FR 1261567
(43) Date de publication de la demande: 07.10.2015
(73) Titulaire: SEB S.A., 69130 Ecully (FR)
(72) Inventeur: NESPOUX, Johan, 53000 Laval (FR); DESHAYES, Jean-Louis, 53700 Averton (FR); MAUNOURY, Damien, 53470 Chalons du Maine (FR)
(74) Mandataire: Bourrières, Patrice
(86) Numéro de dépôt international: PCT/FR2013/052880
(87) Numéro de publication internationale: WO 2014/087077

(56) Documents cités:
- EP-A1- 1 922 960
- GB-A- 2 387 768
- US-A- 6 076 452

## Description

La présente invention se rapporte au domaine technique général des appareils électroménagers de préparation culinaire comportant un récipient de travail comprenant un fond recevant un outil rotatif entraîné en rotation par un moteur et comprenant un dispositif de chauffage destiné à chauffer le contenu du récipient de travail et se rapporte plus particulièrement à un appareil électroménager comprenant un panier pour la cuisson à la vapeur venant reposer dans le récipient de travail, au-dessus de l'outil rotatif.

Il est connu, de la demande de brevet FR 2 326 171, un appareil de préparation culinaire comprenant un récipient de travail renfermant un outil entraîné en rotation par un moteur, le récipient de travail comportant une résistance chauffante disposée dans le fond du récipient de travail et un panier pour la cuisson à la vapeur.

Un tel appareil présente cependant l'inconvénient de ne pas permettre à l'utilisateur un nettoyage aisé du fond du récipient, l'outil étant fixé dans le fond du récipient et ne pouvant être démonté aisément par l'utilisateur. Un tel appareil avec un outil non démontable présente également l'inconvénient de ne pas permettre à l'utilisateur de changer d'outil pour un outil plus adapté à la réalisation d'autres types de préparations culinaires.

Aussi, un but de la présente invention est de proposer un appareil électroménager de préparation culinaire remédiant à ces inconvénients qui procure une bonne ergonomie d'utilisation et qui soit simple et économique à réaliser.

A cet effet, l'invention se rapporte à un appareil électroménager de préparation culinaire comportant un récipient de travail comprenant un fond recevant un outil rotatif entraîné en rotation par un moteur et une extrémité supérieure ouverte par laquelle des ingrédients peuvent être introduits dans le récipient de travail, un dispositif de chauffage destiné à chauffer le contenu du récipient de travail, et un panier pour la cuisson à la vapeur venant reposer dans le récipient de travail au-dessus de l'outil rotatif, caractérisé en ce que l'outil rotatif est amovible du récipient de travail et en ce que le panier comporte un fond comprenant un orifice qui est traversé par un organe de préhension de l'outil rotatif lorsque le panier repose dans le récipient de travail.

Par outil amovible, on entend un outil pouvant être retiré du fond du récipient sans faire appel à un outil, par une simple manipulation de l'utilisateur.

Une telle caractéristique présente l'avantage de permettre un démontage aisé de l'outil rotatif pour son changement ou pour son nettoyage en saisissant l'organe de préhension, ce dernier présentant l'avantage de s'étendre vers l'extrémité supérieure ouverte du récipient de travail.

Selon une autre caractéristique de l'invention, l'orifice comporte un élément obturateur, mobile ou déformable, pouvant occuper une position de repos dans laquelle l'élément obturateur masque au moins partiellement l'orifice du panier.

Un tel élément obturateur permet d'éviter que des aliments présents dans le panier ne tombent par l'orifice lorsque le panier est retiré du récipient de travail.

Selon une autre caractéristique de l'invention, l'élément obturateur masque sensiblement l'intégralité de l'orifice du panier lorsqu'il est en position de repos.

Selon une autre caractéristique de l'invention, l'élément obturateur est ramené automatiquement dans la position de repos lorsqu'il n'est pas repoussé par l'organe de préhension.

Selon encore une autre caractéristique de l'invention, l'élément obturateur est constitué par une membrane flexible comprenant des fentes pour le passage de l'organe de préhension de l'outil rotatif, la membrane flexible se déformant lors du passage de l'organe de préhension au travers des fentes.

Selon encore une autre caractéristique de l'invention, l'élément obturateur est réalisé en matériau élastomère.

Selon une autre caractéristique de l'invention, l'orifice est situé au sommet d'une cheminée faisant saillie au fond du panier.

Selon une autre caractéristique de l'invention, l'orifice présente une largeur supérieure à 2 cm.

Selon une autre caractéristique de l'invention, l'orifice occupe une position centrale dans le panier.

Selon une autre caractéristique de l'invention, l'outil rotatif présente au moins une lame coupante.

Une telle caractéristique présente l'avantage de permettre la réalisation de préparation hachée ou mixée dans le fond du récipient de travail.

Selon une autre caractéristique de l'invention, le récipient de travail comporte une paroi périphérique présentant des bossages sur lesquels le panier vient reposer lorsqu'il est placé dans le récipient de travail.

Selon une autre caractéristique de l'invention, le fond du panier comporte de multiples ouvertures d'une largeur inférieure à 2 mm.

Selon une autre caractéristique de l'invention, l'organe de préhension est formé par une partie supérieure d'un moyeu de l'outil rotatif, le moyeu s'étendant en hauteur sur plus de la moitié de la hauteur du récipient de travail et avantageusement sur plus des deux tiers de la hauteur du récipient de travail.

Une telle caractéristique permet de faciliter la préhension de l'outil rotatif, ce dernier présentant l'avantage de s'étendre largement au dessus du volume de mixage du récipient, de sorte qu'il ne baigne pas dans la préparation liquide pouvant être présente au fond du récipient et présente une température réduite.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective éclatée d'un appareil de préparation culinaire selon un mode particulier de réalisation de l'invention ;
- la figure 2 est une vue de l'appareil de la figure 1 lorsque le récipient de travail est équipé de l'outil rotatif et du panier, le couvercle étant représenté en position ouverte ;
- la figure 3 est une vue en coupe longitudinale de l'appareil de la figure 1 équipé de l'outil rotatif, du panier et du couvercle en position fermée.

Seuls les éléments nécessaires à la compréhension de l'invention ont été représentés. Pour faciliter la lecture des dessins, les mêmes éléments portent les mêmes références d'une figure à l'autre.

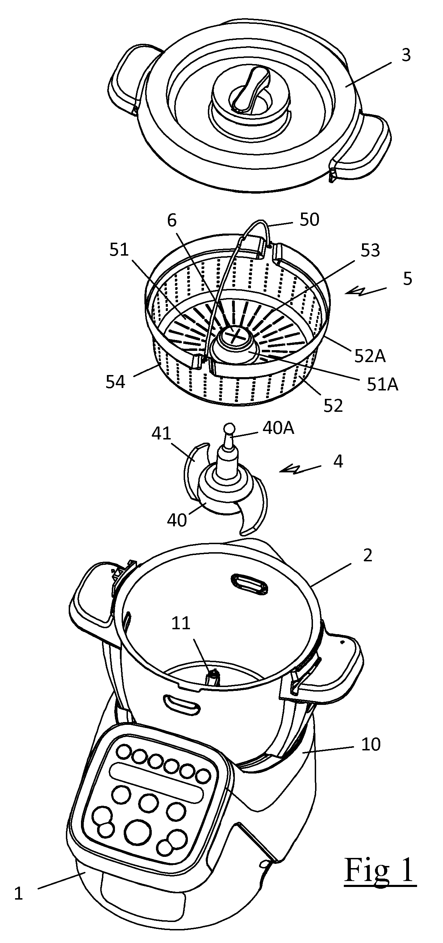

Les figures 1 à 3 représentent un appareil de préparation culinaire comportant un boîtier 1 et un récipient de travail 2 amovible reposant sur un socle 10 du boîtier 1, le récipient de travail 2 comportant une enveloppe cylindrique, d'une hauteur de l'ordre de 15 cm et d'un diamètre de l'ordre de 20 cm, munie d'une extrémité supérieure ouverte par laquelle les ingrédients peuvent être introduits dans le récipient de travail 2, cette extrémité supérieure ouverte étant fermée par un couvercle 3 amovible.

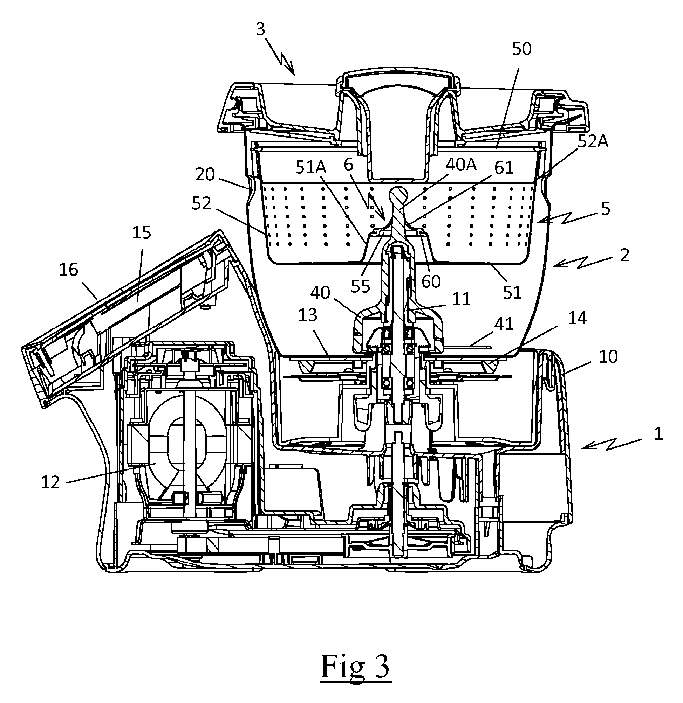

Le récipient de travail 2 est avantageusement réalisé en acier inox et comprend un fond supportant un entraîneur 11 relié par une chaine cinématique à un moteur 12, visible uniquement sur la figure 3, le socle 10 étant équipé d'une plaque 13 chauffante munie d'une résistance 14, du type résistance blindée, qui permet de chauffer le contenu du récipient de travail 2.

L'entraîneur 11 permet l'entraînement en rotation d'un outil coupant 4 comportant un moyeu 40 central supportant deux lames 41 courbes en acier inox, disposées à 180° l'une de l'autre, permettant de hacher les aliments disposés dans le fond du récipient de travail 2, le moyeu 40 étant réalisé par surmoulage dans un matériau plastique et venant s'accoupler de manière amovible sur l'entraîneur 11.

La résistance 14 et le moteur 12 sont pilotés, de manière connue en soi, par une carte électronique 15 disposée sous un panneau de commande 16 présent sur une face avant du boîtier 1, cette carte électronique recevant la valeur de la température mesurée par un palpeur de température et assurant la régulation de l'alimentation de la résistance 14 de façon à amener le contenu du récipient de travail 2 à une température de consigne.

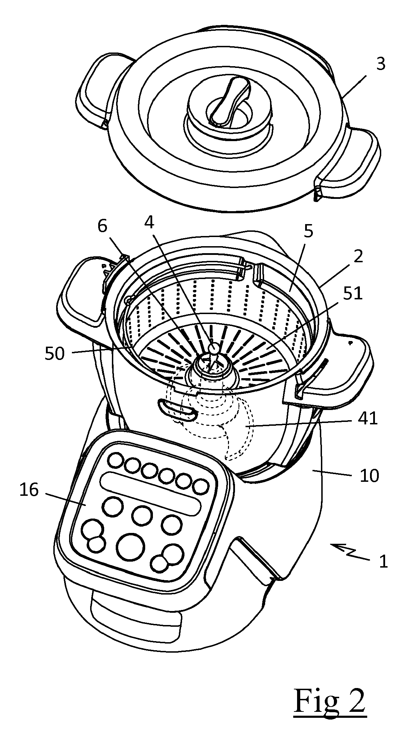

L'appareil comprend également un panier 5 perforé, pour la cuisson à la vapeur, venant reposer de manière amovible dans le récipient de travail 2, au-dessus de l'outil coupant 4, le panier 5 présentant une hauteur de l'ordre de 8 cm et étant muni d'une poignée 50 de préhension pivotante pouvant occuper une position verticale, illustrée sur la figure 1, dans laquelle la poignée 50 s'étend au-dessus du panier 5, et une position rabattue, illustrée sur les figures 2 et 3, dans laquelle la poignée 50 occupe une position horizontale à l'intérieur du panier 5.

Le panier 5 comprend un fond 51 ainsi qu'une paroi périphérique 52 munis de multiples ouvertures 53, 54 permettant le passage de la vapeur, ces ouvertures présentant une taille adaptée pour que les ingrédients solides disposés dans le panier 5 restent contenus dans le panier 5 et ne passent pas au travers des ouvertures 53, 54. A titre d'exemple, les ouvertures dans le fond du panier 5 sont constituées par des fentes 53 s'étendant radialement au panier et présentant une largeur inférieure à 2 mm, les ouvertures dans la paroi périphérique du panier 5 étant constituées par des trous circulaires 54 d'un diamètre inférieur à 2 mm.

Conformément à la figure 3, la paroi périphérique 52 du panier comporte un épaulement 52A venant reposer sur des bossages 20 formés sur la surface intérieure de l'enveloppe cylindrique du récipient de travail 2, les bossages 20 assurant le maintien du panier 5 à une distance prédéterminée du fond du récipient de travail 2, de l'ordre de 6 cm, de manière à ménager sous le panier un volume de mixage d'un peu moins de 2 litres.

Conformément aux figures 2 et 3, le fond 51 du panier comporte une cheminée 51A centrale tronconique, d'une hauteur de l'ordre de 2 cm, venant s'engager autour du moyeu 40 de l'outil coupant 4 lorsque le panier repose dans le récipient de travail 2, et la partie supérieure du moyeu de l'outil coupant comporte un organe de préhension 40A, constituée par une tige avec une extrémité boursoufflée, qui s'étend axialement vers l'ouverture supérieure du récipient de travail 2 et traverse un orifice 55, d'un diamètre de l'ordre de 3 cm, ménagé au sommet de la cheminée 51A.

De manière préférentielle, le moyeu 40 de l'outil coupant 4 s'étend sur plus de la moitié de la hauteur du récipient de travail 2, et avantageusement sur plus des deux tiers de la hauteur du récipient de travail 2, de manière à ce que l'extrémité supérieure de l'organe de préhension 40A déborde largement dans la moitié supérieure du récipient de travail 2 lorsque l'outil coupant 4 est disposé dans le fond du récipient de travail 2.

Conformément à la figure 1, l'orifice 55 du panier 5 est avantageusement équipé d'un élément obturateur 6 qui vient masquer l'orifice 55 lorsque ce dernier n'est pas traversé par la partie supérieure du moyeu 40, un tel élément obturateur 6 permettant d'éviter que les aliments disposés dans le panier 5 ne tombent par l'orifice 55 lorsque l'utilisateur retire le panier 5 du récipient de travail 2. Cet élément obturateur est, dans le mode particulier de réalisation illustré, constitué par une membrane 6 en silicone comprenant un bourrelet périphérique 60 fixé sur le bord de l'orifice 55 et comportant une partie centrale 61 comprenant quatre fentes, s'étendant à 90° les unes des autres, permettant le passage de l'organe de préhension 40A par déformation élastique de la partie centrale 61 de la membrane 6.

Le fonctionnement de l'appareil va maintenant être décrit.

Lorsque l'utilisateur souhaite réaliser une soupe avec des morceaux solides, il place l'outil coupant 4 sur l'entraîneur 11 et verse les ingrédients liquides et solides à mixer dans le fond du récipient de travail 2. Il place ensuite le panier 5 dans le récipient de travail de telle sorte que le panier repose sur les bossages, ainsi que cela est illustré sur les figures 2 et 3, l'extrémité supérieure de l'organe de préhension 40A pénétrant alors dans le panier 5 par l'orifice 55 en repoussant les parties souple de la partie centrale 61 de la membrane 6.

L'utilisateur dispose ensuite dans le panier 5 les ingrédients solides qui doivent être cuits sans être mixés, puis appuie sur un bouton du panneau de commande 16 de l'appareil pour démarrer un programme de cuisson automatique intégré dans la carte électronique 15. Le programme pilote alors l'alimentation de la résistance 14 pour effectuer une première phase de cuisson des aliments puis ordonne la mise en route du moteur 12 pour entraîner l'outil coupant 4 en rotation et hacher les aliments cuits présents dans la moitié inférieure du récipient de travail 2.

A la fin du programme, l'utilisateur peut retirer le panier 5 du récipient de travail 2, en le soulevant par la poignée 50, la membrane 6 se positionnant alors automatiquement dans une position de repos, illustrée sur la figure 1, dans laquelle elle masque l'orifice 55 et empêche que les aliments présents dans le panier ne tombent par cet orifice 55.

L'utilisateur peut alors retirer l'outil coupant 4, pour son nettoyage, en saisissant l'organe de préhension 40A, ce dernier, présentant l'avantage d'être disposé dans la moitié supérieure du récipient de travail 2 de sorte qu'il ne baigne pas dans la préparation liquide, est facilement accessible et présente une température réduite. L'utilisateur peut donc effectuer cette opération aisément et sans risque de venir toucher une partie brûlante du récipient de travail 2, en particulier une partie du récipient de travail 2 située à proximité de la plaque 13 chauffante.

Un tel appareil de préparation culinaire présente donc l'avantage de permettre la réalisation de soupes avec des morceaux de façon automatique, l'utilisateur n'ayant qu'à introduire les morceaux d'aliments cuits, au moyen du panier 5, dans le potage velouté obtenu par mixage dans la partie inférieure du récipient de travail 2.

De plus, un tel appareil présente également l'avantage de posséder un outil coupant 4 amovible qui simplifie le nettoyage et permet à l'utilisateur d'adapter l'outil coupant 4 à la préparation à réaliser, l'outil coupant 4 pouvant par exemple être remplacé par un outil émulsionneur pour réaliser des sauces.

Enfin, l'appareil présente également l'avantage de pouvoir être utilisé sans outil coupant 4, par exemple pour une cuisson des aliments sans mixage, le retrait de l'outil coupant 4 permettant d'optimiser le volume du récipient et du panier vapeur.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, l'élément obturateur pourra être constitué par un volet monté pivotant en bordure de l'orifice du panier de manière à s'effacer sous la poussée exercée par l'organe de préhension lorsque le panier est inséré dans le récipient de travail, le volet étant ramené automatiquement, par gravité ou par un ressort de rappel, dans une position de repos dans laquelle il masque l'orifice lorsque l'organe de préhension du moyeu est extrait de l'orifice.

## Revendications

1. Appareil électroménager de préparation culinaire comportant un récipient de travail (2) comprenant un fond recevant un outil rotatif (4) entraîné en rotation par un moteur (12) et une extrémité supérieure ouverte par laquelle des ingrédients peuvent être introduits dans le récipient de travail (2), un dispositif de chauffage (14) destiné à chauffer le contenu du récipient de travail (2), et un panier (5) pour la cuisson à la vapeur venant reposer dans le récipient de travail (2) au-dessus de l'outil rotatif (4), **caractérisé en ce que** ledit outil rotatif (4) est amovible du récipient de travail (2) et **en ce que** ledit panier (5) comporte un fond (51) comprenant un orifice (55) qui est traversé par un organe de préhension (40A) de l'outil rotatif (4) lorsque le panier (5) repose dans le récipient de travail (2).

2. Appareil électroménager de préparation culinaire selon la revendication 1, **caractérisé en ce que** ledit orifice (55) comporte un élément obturateur (6), mobile ou déformable, pouvant occuper une position de repos dans laquelle ledit élément obturateur (6) masque au moins partiellement l'orifice (55) du panier (5).

3. Appareil électroménager de préparation culinaire selon la revendication 2, **caractérisé en ce que** l'élément obturateur (6) masque sensiblement l'intégralité de l'orifice (55) du panier (5) lorsqu'il est en position de repos.

4. Appareil électroménager de préparation culinaire selon l'une quelconque des revendications 2 à 3, **caractérisé en ce que** ledit élément obturateur (6) est ramené automatiquement dans la position de repos lorsqu'il n'est pas repoussé par l'organe de préhension (40A).

5. Appareil électroménager de préparation culinaire selon l'une quelconque des revendications 2 à 4, **caractérisé en ce que** l'élément obturateur (6) est constitué par une membrane flexible comprenant des fentes pour le passage de l'organe de préhension (40A) de l'outil rotatif, ladite membrane (6) flexible se déformant lors du passage de l'organe de préhension (40A) au travers des fentes.

6. Appareil électroménager de préparation culinaire selon l'une quelconque des revendications 2 à 5, **caractérisé en ce que** ledit élément obturateur (6) est réalisé en matériau élastomère.

7. Appareil électroménager de préparation culinaire selon l'une quelconque des revendications 1 à 6, **caractérisé en ce que** ledit orifice (55) est situé au sommet d'une cheminée (51A) faisant saillie au fond du panier (5).

8. Appareil électroménager de préparation culinaire selon l'une quelconque des revendications 1 à 7, **caractérisé en ce que** l'orifice (55) présente une largeur supérieure à 2 cm.

9. Appareil électroménager de préparation culinaire selon l'une quelconque des revendications 1 à 8, **caractérisé en ce que** l'orifice (55) occupe une position centrale dans le panier (5).

10. Appareil électroménager de préparation culinaire selon l'une quelconque des revendications 1 à 9, **caractérisé en ce que** l'outil rotatif (4) présente au moins une lame coupante (41).

11. Appareil électroménager de préparation culinaire selon l'une quelconque des revendications 1 à 10, **caractérisé en ce que** le récipient de travail (2) comporte une paroi périphérique présentant des bossages (20) sur lesquels le panier (5) vient reposer lorsqu'il est placé dans le récipient de travail (2).

12. Appareil électroménager de préparation culinaire selon l'une quelconque des revendications 1 à 11, **caractérisé en ce que** le fond (51) du panier (5) comporte de multiples ouvertures (53) d'une largeur inférieure à 2 mm.

13. Appareil électroménager de préparation culinaire selon l'une quelconque des revendications 1 à 12, **caractérisé en ce que** l'organe de préhension (40A) est formé par une partie supérieure d'un moyeu (40) de l'outil rotatif (4), ledit moyeu (40) s'étendant en hauteur sur plus de la moitié de la hauteur du récipient de travail (2) et avantageusement sur plus des deux tiers de la hauteur du récipient de travail (2).

## Patentansprüche

1. Elektrohaushaltsgerät zur Nahrungsmittelzubereitung mit einem Arbeitsbehälter (2), in dessen Boden sich ein drehbares Werkzeug (4) befindet, das von einem Motor (12) in Drehung versetzt wird, und einem offenen oberen Ende, durch das die Zutaten in den Arbeitsbehälter (2) gegeben werden können, mit einer Erwärmungsvorrichtung (14) zum Erwärmen des Inhalts des Arbeitsbehälters (2) und einem Korbeinsatz (5) zum Dampfgaren, der in den Arbeitsbehälter (2) oberhalb des drehbaren Werkzeugs (4) eingesetzt wird, **dadurch gekennzeichnet, dass** dieses drehbare Werkzeug (4) aus dem Arbeitsbehälter (2) herausgenommen werden kann und dass der genannte Korbeinsatz (5) mit einem Boden (51) versehen ist, in dem sich eine Öffnung (55) befindet, durch die ein Greiforgan (40A) des drehbaren Werkzeugs (4) reicht, wenn der Korbeinsatz (5) in den Arbeitsbehälter (2) eingesetzt ist.

2. Elektrohaushaltsgerät zur Nahrungsmittelzubereitung nach Anspruch 1, **dadurch gekennzeichnet, dass** sich in der Öffnung (55) ein bewegliches oder verformbares Verschlusselement (6) befindet, das eine Ruhestellung einnehmen kann, in der dieses Verschlusselement (6) die Öffnung (55) des Korbeinsatzes (5) zumindest teilweise verdeckt.

3. Elektrohaushaltsgerät zur Nahrungsmittelzubereitung nach Anspruch 2, **dadurch gekennzeichnet, dass** das Verschlusselement (6) im Wesentlichen die gesamte Öffnung (55) des Korbeinsatzes (5) bedeckt, wenn es sich in der Ruhestellung befindet.

4. Elektrohaushaltsgerät zur Nahrungsmittelzubereitung nach einem der Ansprüche 2 bis 3, **dadurch gekennzeichnet, dass** das genannte Verschlusselement (6) automatisch in die Ruhestellung zurückbewegt wird, wenn es nicht durch das Greiforgan (40A) zurückgedrückt wird.

5. Elektrohaushaltsgerät zur Nahrungsmittelzubereitung nach einem der Ansprüche 2 bis 4, **dadurch gekennzeichnet, dass** das Verschlusselement (6) aus einer biegsamen Membran besteht, die mit Schlitzen versehen ist, durch die das Greiforgan (40A) des drehbaren Werkzeugs hindurchgeführt werden kann, wobei sich diese biegsame Membran (6) verformt, wenn das Greiforgan (40A) durch die Schlitze hindurchgeführt wird.

6. Elektrohaushaltsgerät zur Nahrungsmittelzubereitung nach einem der Ansprüche 2 bis 5, **dadurch gekennzeichnet, dass** das genannte Verschlusselement (6) aus Elastomermaterial besteht.

7. Elektrohaushaltsgerät zur Nahrungsmittelzubereitung nach einem der Ansprüche 1 bis 6, **dadurch gekennzeichnet, dass** sich die genannte Öffnung (55) am oberen Ende eines Schachts (51 A) befindet, der aus dem Boden des Korbeinsatzes (5) heraussteht.

8. Elektrohaushaltsgerät zur Nahrungsmittelzubereitung nach einem der Ansprüche 1 bis 7, **dadurch gekennzeichnet, dass** die Öffnung (55) breiter als 2 cm ist.

9. Elektrohaushaltsgerät zur Nahrungsmittelzubereitung nach einem der Ansprüche 1 bis 8, **dadurch gekennzeichnet, dass** sich die Öffnung (55) mittig in dem Korbeinsatz (5) befindet.

10. Elektrohaushaltsgerät zur Nahrungsmittelzubereitung nach einem der Ansprüche 1 bis 9, **dadurch gekennzeichnet, dass** das drehbare Werkzeug (4) mit mindestens einer Schneidklinge (41) versehen ist.

11. Elektrohaushaltsgerät zur Nahrungsmittelzubereitung nach einem der Ansprüche 1 bis 10, **dadurch gekennzeichnet, dass** der Arbeitsbehälter (2) von einer Wandung umschlossen wird, die mit Vorsprüngen (20) versehen ist, auf denen der Korbeinsatz (5) aufliegt, wenn er in den Arbeitsbehälter (2) eingesetzt wird.

12. Elektrohaushaltsgerät zur Nahrungsmittelzubereitung nach einem der Ansprüche 1 bis 11, **dadurch gekennzeichnet, dass** sich im Boden (51) des Korbeinsatzes (5) mehrere Öffnungen (53) befinden, die weniger als 2 mm breit sind.

13. Elektrohaushaltsgerät zur Nahrungsmittelzubereitung nach einem der Ansprüche 1 bis 12, **dadurch gekennzeichnet, dass** das Greiforgan (40A) durch ein Oberteil einer Nabe (40) des drehbaren Werkzeugs (4) gebildet wird, wobei sich diese Nabe (40) in der Höhe über mehr als die halbe Höhe des Arbeitsbehälters (2) und vorzugsweise über mehr als zwei Drittel der Höhe des Arbeitsbehälters (2) erstreckt.

## Claims

1. Food preparation household electrical appliance consisting of a working receptacle (2) comprising a bottom receiving a rotary tool (4) rotated by a motor (12) and an open upper end through which ingredients may be inserted into the working receptacle (2), a heater (14) for heating the contents of the working receptacle (2) and a basket (5) for steam cooking which sits in the working receptacle (2) above the rotary tool (4), **characterised in that** said rotary tool (4) can be removed from the working receptacle (2) and **in that** said basket (5) has a bottom (51) with an orifice (55) which is penetrated by a gripping member (40A) of the rotary tool (4) when the basket (5) rests in the working receptacle (2).

2. Food preparation household electrical appliance according to claim 1, **characterised in that** said orifice (55) has a closure element (6), movable or deformable, which can occupy a resting position in which said closure element (6) at least partially covers the orifice (55) of the basket (5).

3. Food preparation household electrical appliance according to claim 2, **characterised in that** the closure element (6) almost covers the entire orifice (55) of the basket (5) when in resting position.

4. Food preparation household electrical appliance according to any of claims 2 to 3, **characterised in that** said closure element (6) is automatically returned to the resting position when it is not pushed by the gripping member (40A).

5. Food preparation household electrical appliance according to any of claims 2 to 4, **characterised in that** the closure element (6) consists of a flexible membrane comprising slots allowing the gripping member (40A) of the rotary tool to pass through, said flexible membrane (6) deforming when the gripping member (40A) passes through the slots.

6. Food preparation household electrical appliance according to any of claims 2 to 5, **characterised in that** said closure element (6) is made of elastomer material.

7. Food preparation household electrical appliance according to any of claims 1 to 6, **characterised in that** said orifice (55) is located at the top of a feeder tube (51 A) projecting to the bottom of the basket (5).

8. Food preparation household electrical appliance according to any of claims 1 to 7, **characterised in that** the orifice (55) has a width of over 2 cm.

9. Food preparation household electrical appliance according to any of claims 1 to 8, **characterised in that** the orifice (55) is positioned in the centre of the basket (5).

10. Food preparation household electrical appliance according to any of claims 1 to 9, **characterised in that** the rotary tool (4) has at least one cutting blade (41µ).

11. Food preparation household electrical appliance according to any of claims 1 to 10, **characterised in that** the working receptacle (2) comprises a peripheral wall with projections (20) on which the basket (5) rests when it is placed in the working receptacle (2).

12. Food preparation household electrical appliance according to any of claims 1 to 11, **characterised in that** the bottom (51) of the basket (5) has multiple openings (53) of a width less than 2 mm.

13. Food preparation household electrical appliance according to any of claims 1 to 12, **characterised in that** the gripping member (40A) is formed by an upper part of a hub (40) of the rotary tool (4), said hub (40) extending in height over more than half the height of the working receptacle (2) and preferably over more than two thirds of the height of the working receptacle (2).
